# EUROPÄISCHE PATENTSCHRIFT

(11) **EP 3 303 023 B1**
(45) Veröffentlichungstag und Bekanntmachung des Hinweises auf die Patenterteilung: **24.07.2019**
(21) Anmeldenummer: 16724667.7
(22) Anmeldetag: 25.05.2016
(51) Int. Cl.: B60G 11/28, F16F 9/05

(54) **STÜTZEINHEIT**
SUPPORT UNIT
ÉLÉMENT DE SUPPORT

(30) Priorität: 29.05.2015 DE 102015108519
(43) Veröffentlichungstag der Anmeldung: 11.04.2018
(73) Patentinhaber: SAF-HOLLAND GmbH, 63856 Bessenbach (DE)
(72) Erfinder: FÄTH, Stefan, 63743 Aschaffenburg (DE); WALLMEIER, Stefan, 63773 Goldbach (DE)
(74) Vertreter: Müller Schupfner & Partner Patent- und Rechtsanwaltspartnerschaft mbB
(86) Internationale Anmeldenummer: PCT/EP2016/061794
(87) Internationale Veröffentlichungsnummer: WO 2016/193094

(56) Entgegenhaltungen:
- EP-A1- 0 647 795
- DE-A1- 19 702 155
- DE-A1-102004 061 989
- DE-U1-202005 007 933
- US-A- 5 060 916
- US-A1- 2006 226 586

## Beschreibung

Die vorliegende Erfindung betrifft eine Stützeinheit zum Einsatz an einer oder mit einer Luftfeder.

Stützeinheiten, insbesondere zur Abstützung des Tauchkolbens einer Luftfeder, sind aus dem Stand der Technik bekannt. Sie sind insbesondere dann notwendig, wenn das Nutzfahrzeug eine Kranverladung durchführen können soll, wobei das Nutzfahrzeug angehoben wird und die an den Luftfedern hängenden schwenkbaren Führungslenker durch die Gewichtskraft der Räder des Nutzfahrzeuges nach unten verlagert werden, wobei der Tauchkolben aus der Luftfeder herausgezogen wird. In diesem Fall hat es sich als vorteilhaft herausgestellt, eine Möglichkeit zu schaffen, den Tauchkolben vom Führungslenker abzuheben. Auf diese Weise werden zu hohe Belastungen des Luftfederbalges und dessen Durchreißen verhindert. Um den Tauchkolben dennoch richtig auf dem Führungslenker richtig zu positionieren, ist eine Stützeinheit vorgesehen, welche den Tauchkolben im normalen Betrieb des Nutzfahrzeuges abstützt und relativ zum Führungslenker in der richtigen Position hält. Durch diese Auslegung sind allerdings mehr Bauteile als bei einem herkömmlichen Tauchkolben nötig und das Gewicht der Luftfeder ist aufgrund der Vielzahl verschiedener in Eingriff stehender Bauteile höher als bei einem einstückig ausgebildeten Tauchkolben.

Die US 2006/0226586 A1 offenbart eine Luftfederkolbenanordnung, welche eine äußere Schale und eine Verstärkung aufweist.

Die DE 20 2005 007 933 U1 befasst sich mit einem Tauchkolben, wobei der Fußbereich des Tauchkolbenmantels mit einer nur mit diesem verbundenen Verstärkung versehen ist.

Aufgabe der vorliegenden Erfindung ist es, eine Stützeinheit bereitzustellen, welche zum einen eine hohe Betriebssicherheit, flexible Anpassung an verschiedene Luftfedereinheiten und eine Verringerung des Gewichtes der Luftfeder bzw. der an die Luftfedereinheit angrenzenden Baugruppen ermöglicht.

Diese Aufgaben werden gelöst mit einer Stützeinheit gemäß Anspruch 1. Weitere Vorteile und Merkmale der vorliegenden Erfindung ergeben sich aus den abhängigen Ansprüchen.

Erfindungsgemäß weist die Stützeinheit einen Grundkörper und ein Verstärkungselement auf, wobei der Grundkörper eine erste Kontaktseite zur Festlegung am Fahrwerk eines Nutzfahrzeuges aufweist, wobei an einer zweiten Kontaktseite des Grundkörpers das Verstärkungselement festgelegt oder festlegbar ist und zur Abstützung eines Tauchkolbens einer Luftfeder ausgelegt ist, wobei das Verstärkungselement aus einem Material höherer Festigkeit und/oder Härte ausgebildet ist als der Grundkörper. Die Stützeinheit ist mit anderen Worten bevorzugt ein Teil eines mehrteilig ausgebildeten Tauchkolbens einer Luftfeder, wobei die Stützeinheit dafür ausgelegt ist, vorzugsweise am Längslenker des Nutzfahrzeuges festgelegt zu sein, um die restlichen Bauteile des Tauchkolbens im Einsatz des Nutzfahrzeuges relativ zum Führungslenker in der richtigen Position zu halten. Besonders bevorzugt ist dabei der Grundkörper aus einem möglichst leichten Material hergestellt. Hierfür bieten sich unter anderem Aluminiumwerkstoffe oder Kunststoffe oder auch Faserverbundwerkstoffe an. Nachteilig bei diesen leichteren Materialien ist, dass diese oft eine geringere Widerstandsfähigkeit gegen Abreibung und Oberflächenabnutzung aufweisen. Aus diesem Grunde ist ein Verstärkungselement am Grundkörper festlegbar oder vorzugsweise festgelegt, welches die entsprechenden Kontaktseiten, insbesondere die zweite Kontaktseite des Grundkörpers, gegen Verschleiß durch Abreibung, Stöße oder hohe lokale Druckkräfte schützt. Es kann auf diese Weise die Lebensdauer der Stützeinheit deutlich gesteigert werden, da insbesondere die zumeist aus Metall oder ähnlich harten Materialen gefertigten Tauchkolben nicht mehr unmittelbar auf dem leichten und etwas weicheren Material des Grundkörpers aufliegen, sondern sich vorzugsweise ausschließlich an dem Verstärkungselement abstützen. Dabei weist das Verstärkungselement eine höhere Festigkeit und/oder Härte auf als das Material des Grundkörpers. In diesem Zusammenhang wird zwischen der Materialkenngröße Festigkeit und der Materialkenngröße Härte unterschieden. Die Festigkeit ist dabei insbesondere die Widerstandsfähigkeit gegen Zug, Druck oder Torsionskräfte, welche eine plastische Verformung oder ein Auseinanderreißen bzw. Verbeulen des Verstärkungselements verhindert. Die Härte des Verstärkungselements bzw. des Materials des Verstärkungselements ist insbesondere die charakteristische Kenngröße für die Widerstandsfähigkeit der Oberfläche des Verstärkungselements, dem Eindringen von Körpern in die Oberfläche des Verstärkungselements zu widerstehen. In diesem Zusammenhang wird insbesondere die Brinellhärte als charakteristische Materialkenngröße herangezogen. Insbesondere bevorzugt kann es sein, dass insbesondere die zum Tauchkolben und von der zweiten Kontaktseite des Grundkörpers abgewandte Seite des Verstärkungselements eine höhere Oberflächenhärte aufweist als die zum Tauchkolben hingewandte Seite. Insbesondere an dieser nach außen gewandten Seite des Verstärkungselements ist die größte Belastung der Oberfläche zu erwarten, da die dort benachbarten Teile des Tauchkolbens bzw. der Luftfeder auf die Oberfläche des Verstärkungselements einwirken. Es ist jedoch auch der Zusammenhang bekannt, dass bei höherer Härte eines bestimmten metallischen Werkstoffes dessen Festigkeit, insbesondere dessen Widerstandsfähigkeit gegen Sprödbruch, sinkt. Es ist daher vorzugsweise ein Kompromiss aus einer hohen Festigkeit und einer noch ausreichend hohen Härte, besonders bevorzugt für das Material des Verstärkungselements vorgesehen, welcher zum einen eine ausreichende Elastizität des Materials des Verstärkungselements gewährleistet und zum anderen einen möglichst nur geringen Oberflächenverschleiß im Betrieb der Stützeinheit am Verstärkungselement zulässt. Besonders bevorzugt wird nach dem vollständigen Aufsetzen des Tauchkolbens auf den Grundkörper die vom Tauchkolben auf den Grundkörper übertragene Kraft ausschließlich von der der ersten Kontaktseite gegenüber liegenden Seite des Grundkörpers aufgenommen. Die seitlichen, vorzugsweise kegelförmig ausgebildeten Bereiche der zweiten Kontaktseite mit dem zumindest einen daran angeordneten Verstärkungselement dienen dabei vorzugsweise der Führung des Tauchkolbens und dem Schutz des Materials des Grundkörpers während des Aufsetzens oder Abhebens des Tauchkolbens auf den oder von dem Grundkörper.

Besonders bevorzugt ist der Grundkörper aus Kunststoff ausgebildet. Kunststoff eignet sich als Herstellungsmaterial da es besonders günstig herzustellen ist und auch in komplexeren Formen auf einfache Weise und ohne großen fertigungstechnischen Aufwand beispielsweise gegossen werden kann. Insbesondere bevorzugt ist als Kunststoff dabei ein faserverstärkter Kunststoff vorgesehen, welcher beispielsweise durch Fasern eines metallischen Werkstoffes oder eines Kohlefaser- oder Aramidfaserwerkstoffes in den entsprechenden Bereichen verstärkt ist. Insbesondere bevorzugt ist der Grundkörper dabei durch Spritzguss hergestellt. Im Rahmen der Ausbildung des Grundkörpers aus Kunststoff versteht es sich jedoch, dass beispielsweise metallische Einsätze vorgesehen sein können, in welchen zum Beispiel ein Gewinde zur Festlegung des Grundkörpers über eine Schraube am Führungslenker vorgesehen ist. Es versteht sich im Rahmen der vorliegenden Erfindung, dass der überwiegende Teil des Grundkörpers aus Kunststoff ausgebildet sein soll.

Weiterhin bevorzugt ist das Verstärkungselement aus Metall ausgebildet. Ein metallischer Werkstoff wie beispielsweise Stahl erreicht vorzugsweise den für das Verstärkungselement der vorliegenden Erfindung erforderlichen Kompromiss zwischen ausreichend hoher Festigkeit und ausreichend hoher Oberflächenhärte. Auf diese Weise kann die Lebensdauer des Verstärkungselements und somit auch der gesamten Stützeinheit deutlich gesteigert werden. Insbesondere bevorzugt ist es, dass das Verstärkungselement als umgeformtes metallisches Werkstück oder als Schmiedeteil ausgebildet ist.

Besonders bevorzugt weist das Verstärkungselement eine Anlagefläche und einen Halteabschnitt auf, wobei die Anlagefläche vom Grundkörper abgewandt ist und wobei der Halteabschnitt in Eingriff mit dem Grundkörper gebracht oder bringbar ist. Der Halteabschnitt ist vorzugsweise ein zumindest bereichsweise gekrümmter Abschnitt des Verstärkungselements, welcher mit einer entsprechenden korrespondierenden Geometrie am Grundkörper eine Hinterschneidung bildet oder auf sonstige Weise in formschlüssigem Eingriff mit dem Grundkörper bringbar ist. In einer besonders bevorzugten Ausführungsform, in der das Verstärkungselement im Bereich des Halteabschnitts in das Material des Grundkörpers eingegossen ist, ist der Halteabschnitt vorzugsweise mit einer Widerhakenförmigen Geometrie ausgestattet, welche einen sicheren, formschlüssigen und stoffschlüssigen Eingriff mit dem Material des Grundkörpers ermöglicht. Die Anlagefläche ist vorzugsweise nach außen im Wesentlichen eben ausgebildet, mit anderen Worten ist die Anlagefläche auf der dem Grundkörper abgewandten Seite des Verstärkungselements vorgesehen und ist im Wesentlichen eben, planar oder mit einer leichten Rundung ausgestattet. Insbesondere bevorzugt erleichtert die Anlagefläche, das Entlanggleiten eines Tauchkolbens beim Aufsetzen des Tauchkolbens auf die Stützeinheit. Es ist darüber hinaus bevorzugt, dass die mittlere Erstreckung der Anlagefläche ca. zumindest doppelt so groß ist wie die mittlere Erstreckung des Halteabschnitts. Auf diese Weise kann besonders viel Anlagefläche mit einem Verstärkungselement bereitgestellt werden, wodurch sich die Kraftübertragung vom Tauchkolben auf das Verstärkungselement optimieren lässt und der Oberflächenverschleiß am Verstärkungselement und am Tauchkolben möglichst gering ausfällt. Es kann somit eine gewichtsoptimierte Ausbildung des Verstärkungselements bereitgestellt werden, wobei für eine bestimmte Anlagefläche bzw. Größe der Anlagefläche das Gewicht des Verstärkungselements trotzdem relativ gering ist, da der Halteabschnitt eine vergleichsweise geringere Erstreckung aufweist und somit auch ein geringeres Gewicht.

Vorzugsweise ist der Halteabschnitt in formschlüssigem Eingriff mit einem Sicherungsabschnitt des Grundkörpers gebracht oder bringbar. Insbesondere ist der Halteabschnitt dabei derart ausgebildet, dass er in eine lösbare Verbindung, wie beispielsweise eine Klickverbindung mit einem entsprechenden Sicherungsabschnitt des Grundkörpers bringbar ist. In einer besonders bevorzugten Ausführungsform der Stützeinheit steht der Halteabschnitt in diesem formschlüssigen Eingriff mit dem Sicherungsabschnitt des Grundkörpers. Darüber hinaus ist es bevorzugt, dass der Grundkörper mehrere Sicherungsabschnitte aufweist, an denen wahlweise ein Verstärkungselement in Eingriff gebracht werden kann. Es ist auf diese Weise möglich, mit ein und demselben Grundkörper verschieden ausgestattete Stützeinheiten herzustellen. Es versteht sich, dass, je mehr Verstärkungselemente an einem Grundkörper angeordnet werden, desto höher das Gewicht der Stützeinheit ausfällt, wobei aber gleichzeitig eine größere Anlagefläche für einen Tauchkolben oder ein ähnliches Bauteil der Luftfeder an der Stützeinheit zur Verfügung gestellt wird. Somit ermöglicht die flexible und lösbare Anordnung von Verstärkungselementen an dem Grundkörper eine Anpassung der Stützeinheit an die im Betrieb des Nutzfahzeuges zu erfüllenden Anforderungen.

In einer weiteren bevorzugten Ausführungsform ist das Verstärkungselement bereichsweise in das Material des Grundkörpers eingegossen. Mit anderen Worten ist dabei vorzugsweise der Halteabschnitt des Verstärkungselements zumindest bereichsweise vorzugsweise vollständig vom Material des Grundkörpers umgossen. Auf diese Weise ist sowohl ein Stoffschluss als auch ein Formschluss zwischen dem Grundkörper und dem Verstärkungselement herstellbar. Der Vorteil dieser Ausführungsform ist, dass die Verbindung zwischen Verstärkungselement und Grundkörper eine festere ist als bei einem bloßen Formschluss zwischen dem Verstärkungselement und dem Grundkörper. Nachteilig ist, dass es nicht ohne weiteres möglich ist, das Verstärkungselement bei Erreichen seiner Lebensdauergrenze vom Grundkörper zu entnehmen und durch ein neues Verstärkungselement zu ersetzen. Diese Ausführungsform ist daher insbesondere an Nutzfahrzeugen mit sehr hoher Belastung der Schnittstelle zwischen der Stützeinheit und den sonstigen Bauteilen der Luftfeder von Vorteil, da insbesondere Vibrationen an dem Fahrwerksystem nicht oder nur sehr geringfügig in die Schnittstelle zwischen dem Verstärkungselement und dem Grundkörper übertragen werden, da diese derart fest miteinander verbunden sind, dass aufgrund von Vibrationen keine Reibung zwischen diesen beiden Bauteilen auftritt.

Insbesondere bevorzugt wird der Halteabschnitt durch elastische Verformung des Verstärkungselements in formschlüssigem Eingriff mit dem Sicherungsabschnitt gebracht, wobei der Sicherungsabschnitt und der Halteabschnitt eine Hinterschneidung bilden und wobei der Eingriff zwischen dem Halteabschnitt und dem Sicherungsabschnitt lösbar ist. Insbesondere bevorzugt weist das Verstärkungselement zwei Halteabschnitte auf, von denen ein erster Halteabschnitt zuerst von einem Anwender mit einem entsprechenden Sicherungsabschnitt am Grundkörper in Eingriff bringbar ist, wobei durch anschließende elastische Verformung bzw. Verbiegung des zwischen den Halteabschnitten liegenden Materials des Verstärkungselements der zweite Halteabschnitt ebenfalls in formschlüssigen Eingriff mit einem zweiten Sicherungsabschnitt am Grundkörper bringbar ist. Durch die elastische Rückstellung des Materials des Verstärkungselements werden beide Halteabschnitte anschließend in ihrem Formschluss mit dem jeweiligen Sicherungsabschnitt gehalten. Insbesondere bevorzugt kann durch erneute elastische Verformung des Verstärkungselements zumindest einer der Halteabschnitte des Verstärkungselements außer Eingriff mit dem jeweils korrespondierenden Sicherungsabschnitt gebracht werden, wodurch das Verstärkungselement von dem Grundkörper entnommen werden kann. Die Ausbildung des Eingriffs zwischen dem Halteabschnitt und dem Sicherungsabschnitt als lösbare Verbindung ist insbesondere geeignet, wenn für unterschiedliche Anwendungen eine verschiedene Anzahl von Verstärkungselementen an einem Grundkörper angeordnet werden soll, oder wenn nach Erreichen der Lebensdauergrenze der Verstärkungselemente diese ausgetauscht werden und durch neue ersetzt werden sollen.

Weiterhin bevorzugt ist ein Sicherungselement vorgesehen, um den Halteabschnitt am Grundkörper zu sichern. Zusätzlich oder alternativ zu der formschlüssigen Verbindung zwischen dem Halteabschnitt und dem Sicherungsabschnitt ist besonders bevorzugt ein Sicherungselement vorgesehen, über welches der Halteabschnitt an dem Grundkörper festlegbar ist. Das Sicherungselement greift dabei vorzugsweise am Grundkörper ein und weist eine Hinterschneidungsgeometrie auf, welche mit dem Halteabschnitt in Eingriff bringbar ist, um diesen am Grundkörper zu sichern. In der einfachsten Ausführungsform ist das Sicherungselement eine einfache Schraube, welche durch eine entsprechende Aussparung am Halteabschnitt hindurchführbar ist und mit dem Grundkörper verschraubt werden kann. Insbesondere, wenn im Betrieb des Nutzfahrzeuges und der Stützeinheit mitunter hohe Verformungsgrade am Verstärkungselement auftreten können, bietet ein Sicherungselement zusätzliche Sicherung gegen ein Lösen des formschlüssigen Eingriffs zwischen dem Grundkörper und dem Verstärkungselement. Mit anderen Worten kann das Sicherungselement sich im Betrieb der Stützeinheit nicht so leicht lösen wie der formschlüssige Eingriff, welcher durch einen Anwender durch Verbiegen des Verstärkungselements hergestellt wird. Es versteht sich, dass als nachteilige Folge hiervon jedoch der Montageaufwand für eine Stützeinheit steigt.

Besonders bevorzugt weist das Verstärkungselement eine Vielzahl von Halteabschnitten auf. Insbesondere bevorzugt sind zumindest zwei Halteabschnitte am Verstärkungselement vorgesehen, welche jeweils mit korrespondierenden Sicherungsabschnitten am Grundkörper in Eingriff bringbar sind. Weiterhin bevorzugt können auch weitere Halteabschnitte am Verstärkungselement vorgesehen sein, welche in formschlüssigem Eingriff mit den entsprechenden Sicherungsabschnitten am Grundkörper bringbar sind. Insbesondere bevorzugt weist der Grundkörper eine größere Anzahl von Sicherungsabschnitten auf als von Halteabschnitten tatsächlich beansprucht werden. Auf diese Weise ist es möglich, eine insbesondere bevorzugt ungleichmäßige Verteilung von Verstärkungselementen am Grundkörper zu erreichen, um bevorzugt den in unterschiedlichen Richtungen mehr oder weniger stark wirkenden Kräften im Einsatz des Nutzfahrzeuges entsprechend eine mehr oder weniger große Zahl von Verstärkungselementen am Grundkörper entgegensetzen zu können. Dabei ist es auf der anderen Seite möglich, mit ein und demselben Grundkörper eine Vielzahl von Anwendungen und verschiedenen Nutzfahrzeugen mit entsprechenden Stützeinheiten zu versorgen, da einfach die Anzahl der Verstärkungselemente und deren Positionierung an den Grundkörpern an die jeweiligen Betriebsverhältnisse angepasst werden können.

Besonders bevorzugt ist die zweite Kontaktseite des Grundkörpers im Wesentlichen kegelförmig oder kegelstumpfförmig ausgebildet. Die zweite Kontaktseite ist vorzugsweise die Seite des Grundkörpers, welche zu einer entsprechenden Auflagefläche an einem Tauchkolben einer Luftfeder hingewandt ist. Besonders bevorzugt ist die zweite Kontaktseite dabei die Mantelfläche eines Kegels oder eines Kegelstumpfes. Darüber hinaus bevorzugt kann die zweite Kontaktseite auch die obere Stirnfläche, das heißt die der ersten Kontaktseite abgewandte Stirnfläche des Kegelstumpfes mit umfassen, da auch in diesem Bereich der Tauchkolben der Luftfeder auf dem Grundkörper zur Auflage bringbar ist. Dabei ist es bevorzugt, dass sämtliche der relevanten oder in Eingriff mit dem Tauchkolben bringbaren Abschnitte der zweiten Kontaktseite jeweils mit Verstärkungselementen ausgestattet werden können. Als im Wesentlichen kegelförmig wird in diesem Zusammenhang insbesondere eine im Wesentlichen einem geometrischen Kegel entsprechende Form definiert, an welcher jedoch beispielsweise Sicherungsabschnitte oder lokale Rundungen an den Kanten im Übergang zur zweiten Kontaktseite oder zur Oberseite des Grundkörpers vorgesehen sein können und als ebenfalls zur im Wesentlichen kegelförmig oder kegelstumpfförmigen Geometrie zugehörig definiert sein sollen. Weiterhin bevorzugt können zur Gewichtsersparnis zusätzliche Aussparungen an der im Wesentlichen kegelförmig ausgebildeten Geometrie vorgesehen sein, um lokale Materialeinsparungen zu erreichen und das Gewicht des Grundkörpers zu reduzieren.

Besonders bevorzugt weist die Anlagefläche des Verstärkungselements einen maximalen Abstand von der zweiten Kontaktseite auf, wobei das Verhältnis des maximalen Abstandes zu einem mittleren Durchmesser der zweiten Kontaktseite 0,02 - 0,3 beträgt, vorzugsweise 0,05 - 0,2 und insbesondere bevorzugt bei ca. 0,05 - 0,1 liegt. Die Anlagefläche, also die der zweiten Kontaktseite abgewandte Seite bzw. Fläche des Verstärkungselements weist vorzugsweise einen maximalen Abstand von der zweiten Kontaktseite bzw. von der Oberfläche der zweiten Kontaktseite auf. Dies eröffnet insbesondere die Möglichkeit, über das Verstärkungselement auch Tauchkolben an einem wesentlich kleineren Grundkörper festlegen zu können, welche eine relativ große Erstreckung verglichen mit der Erstreckung der zweiten Kontaktseite aufweisen. Weiterhin bevorzugt ergibt sich durch die Anordnung von mehr metallisch-elastisch federndem Material zwischen der zweiten Kontaktseite des Grundkörpers und dem entsprechenden korrespondierenden Abschnitt des Tauchkolbens die Möglichkeit, Schwingungen und Stöße, welche vom Tauchkolben auf den Grundkörper übertragen werden, durch das Verstärkungselement entsprechend abzudämpfen bzw. abzufedern. Als mittlerer Durchmesser der zweiten Kontaktseite wird insbesondere bevorzugt der mittlere Durchmesser der zweiten Kontaktseite senkrecht zu einer Höhenachse bzw. Symmetrie oder Rotationssymmetrieachse der kegelförmig oder kegelstumpfförmig ausgebildeten zweiten Kontaktseite definiert. Mit anderen Worten ist dabei der mittlere Durchmesser der Durchmesser der zweiten Kontaktseite, auf deren halber Höhe. Der Bereich von 0,02 - 0,3 des Verhältnisses des maximalen Abstandes zu einem mittleren Durchmesser der zweiten Kontaktseite umfasst dabei sämtliche im Rahmen der vorliegenden Erfindung getesteten und als vorteilhaft angesehenen Ausführungsformen. Insbesondere ermöglicht dieses größte Verhältnis einen ausreichend guten Kompromiss zwischen einer Gewichtszunahme des Verstärkungselements an der Obergrenze des Verhältnisses von 0,3 und einer zu geringen Federwirkung durch das Verstärkungselement an der Untergrenze des Verhältnisses von 0,02. Für hochbelastete Nutzfahrzeuge hat es sich gezeigt, dass ein Verhältnis des maximalen Abstandes zum mittleren Durchmesser von 0,05 nicht unterschritten werden sollte, da auf diese Weise eine ausreichende Federwirkung durch das Verstärkungselement zur Verfügung steht. Für diese Nutzfahrzeuge hat es sich aber auch gezeigt, dass mit einem Wert, welcher 0,2 nicht übersteigt, weiterhin ein ausreichend geringes Gewicht erreicht werden kann, wodurch die Stützeinheit insgesamt zur Gewichtsoptimierung des Nutzfahrzeuges beitragen kann. Der besonders bevorzugte Bereich von 0,05 - 0,1 hat sich dabei insbesondere für Nutzfahrzeuge bewährt, bei welchen eine häufige Kranverladung vorgesehen ist. In diesem Zusammenhang ermöglicht der untere Wert des Verhältnisses von 0,05 eine ausreichend gute Abfederung von Stößen und Schwingungen bei der Kranverladung über das Verstärkungselement und der Wert von nur 0,1 des Verhältnisses kennzeichnet eine gewichtsoptimierte Auslegung des Verstärkungselements.

Besonders bevorzugt ist eine Vielzahl von Verstärkungselementen am Grundkörper vorgesehen, welche an der zweiten Kontaktseite verteilt angeordnet sind. In einer ersten bevorzugten Ausführungsform können die Verstärkungselemente gleichmäßig über den Umfang, das heißt gleichmäßig beispielsweise entlang des auf Höhe des mittleren Durchmessers definierten Umfangs des Grundkörpers bzw. der zweiten Kontaktseite des Grundkörpers verteilt angeordnet sein. Auf diese Weise lassen sich in alle Belastungsrichtungen die gleichen Effekte durch die Verstärkungselemente erzielen.

In einer alternativen Ausführungsform sind die Verstärkungselemente ungleichmäßig verteilt an der zweiten Kontaktseite festlegbar. Dabei dient die ungleichmäßige Verteilung der Verstärkungselemente an der zweiten Kontaktseite insbesondere der lokalen Verstärkung des Grundkörpers der Stützeinheit, um beispielsweise in Längsrichtung des Nutzfahrzeuges auf der Vorder- und auf der Hinterseite des Grundkörpers eine höhere Abstützung bzw. Verstärkung des Grundkörpers durch die Verstärkungselemente zu erreichen als an den zur Fahrzeugmitte bzw. zur Fahrzeugaußenseite hingewandten Flächen des Grundkörpers. Weiterhin hat es sich gezeigt, dass eine Verstärkung des Grundkörpers auf der Seite des Grundkörpers, welche von der Schwenkachse des Führungslenkers abgewandt ist, Vorteile bietet, da bei Beladung des Nutzfahrzeuges der Führungslenker mit der Stützeinheit stärker in den Tauchkolben eintaucht, wodurch an der der Schwenkachse gegenüberliegenden bzw. außen liegenden Seite des Grundkörpers eine größere Verstärkung durch die Verstärkungselemente erforderlich ist als auch der zur Schwenkachse hingewandten Seite des Grundkörpers.

Besonders bevorzugt weist der Grundkörper auf seiner der zweiten Kontaktseite abgewandten Seite eine Strebe auf, wobei das Verstärkungselement auf Höhe der Strebe an der zweiten Kontaktseite festgelegt ist. Insbesondere bevorzugt weist also der Grundkörper auf seiner vorzugsweise nach innen gewandten Seite eine Strebenkonstruktion oder eine fachwerkartige Konstruktion auf. Besonders bevorzugt ist es dabei, dass das Verstärkungselement oder die bevorzugt vorgesehene Vielzahl von Verstärkungselementen jeweils auf Höhe einer oder der jeweiligen Strebe angeordnet sind. Auf diese Weise ist eine Abstützung des Verstärkungselements unmittelbar durch die Strebe möglich. Somit findet auch ein Krafteintrag, welcher vom Tauchkolben über das Verstärkungselement in den Grundkörper wirkt, direkt über die verstärkende Strebe statt. Es lässt sich auf diese Weise eine höhere Stabilität erzielen, wodurch Material zwischen den Streben eingespart werden kann und eine Gewichtsersparnis erreichbar ist.

Besonders bevorzugt weist der Grundkörper an der ersten Kontaktseite einen Eingriffsabschnitt auf, welcher vorzugsweise außermittig an der ersten Kontaktseite angeordnet ist. Die erste Kontaktseite des Grundkörpers ist vorzugsweise die Fläche, mit welcher diese auf den Führungslenker eines Nutzfahrzeuges aufgesetzt und an dem Führungslenker festgelegt werden kann. Um eine Verdrehsicherung des Grundkörpers relativ zum Führungslenker zu erreichen, ist vorzugsweise an der ersten Kontaktseite ein Eingriffsabschnitt vorgesehen, der außermittig bezogen vorzugsweise auf die Symmetrieachse oder auf eventuell am Grundkörper vorgesehene Symmetrieebenen angeordnet ist. An einem vorzugsweise kegelförmig oder kegelstumpfförmig ausgebildeten Grundkörper ist somit der Eingriffsabschnitt vorzugsweise beabstandet von der Mittelachse bzw. Achse der Rotationssymmetrie des Grundkörpers angeordnet. Besonders bevorzugt ist der Eingriffsabschnitt als Vorsprung ausgebildet, welcher mit einer entsprechend korrespondierenden Geometrie am Führungslenker in Eingriff bringbar ist. Zusätzlich zum Eingriffsabschnitt weist der Grundkörper an der ersten Kontaktseite vorzugsweise einen Befestigungsabschnitt auf, in welchen beispielsweise eine Schraube oder ein Bolzen eingeführt und über ein Gewinde in dem Befestigungsabschnitt des Grundkörpers festgelegt werden kann. Dabei wird der Grundkörper vorzugsweise gegen den Führungslenker gepresst, wobei der Eingriffsabschnitt eine Verdrehsicherung des Grundkörpers relativ zum Führungslenker des Nutzfahrzeuges gewährleistet.

Vorzugsweise weist die Anlagefläche des Verstärkungselements eine Längserstreckung quer oder senkrecht zur ersten Kontaktseite und eine Periphererstreckung längs einer um die Symmetrieachse des Grundkörpers verlaufenden Umfangsrichtung auf, wobei die Längserstreckung größer ist als die Periphererstreckung. Mit anderen Worten ist das Verstärkungselement somit im Wesentlichen länglich ausgebildet, wobei die längere Seite des Verstärkungselements im Wesentlichen quer zur durch die erste Kontaktseite aufgespannten Ebene am Grundkörper angeordnet wird. Besonders bevorzugt ist dabei die Längserstreckung zumindest ein Doppeltes der Periphererstreckung der Anlagefläche. Auf diese Weise ist ein Entlanggleiten eines Tauchkolbens von der schmaleren Seite des Grundkörpers aus in Richtung der breiteren Seite des Grundkörpers möglich, wobei der Tauchkolben in Richtung der Längserstreckung der Anlagefläche des Verstärkungselements durch das Verstärkungselement abgestützt wird. Bevorzugt ist die Anlagefläche im Wesentlichen parallel zur zweiten Kontaktseite des Grundkörpers ausgebildet und angeordnet. Im Wesentlichen parallel bedeutet im vorliegenden Fall, dass die Anlagefläche des Verstärkungselements nicht unbedingt den gleichen Krümmungsradius aufweisen muss wie die zweite Kontaktseite des Grundkörpers, sondern im Wesentlichen auch eben oder planar ausgebildet sein kann. Hierbei ist die Periphererstreckung der Anlagefläche des Verstärkungselement vorzugsweise nicht größer als ein Zehntel, besonders bevorzugt nicht größer als ein Zwanzigstel des Umfangs der zweiten Kontaktseite des Grundkörpers auf Höhe des mittleren Durchmessers.

Besonders bevorzugt beträgt die Längserstreckung des Verstärkungselements zumindest ein 0,3-faches, besonders bevorzugt ein zumindest 0,6-faches und insbesondere bevorzugt ist die Längserstreckung des Verstärkungselements gleich der Erstreckung des zweiten Kontaktbereiches parallel zur Symmetrieachse. Die Symmetrieachse ist dabei vorzugsweise die Symmetrieachse eines im Wesentlichen kegelförmig oder kegelstumpfförmig ausgebildeten Grundkörpers. Eine Parallele zu dieser Symmetrieachse definiert somit die Höhe des Grundkörpers, wobei die Längserstreckung des Verstärkungselements zumindest ein 0,3-faches dieser Höhe des Grundkörpers, insbesondere bevorzugt der Höhe des zweiten Kontaktbereiches des Grundkörpers ist. Bei einer Längserstreckung des Verstärkungselements von zumindest einem 0,6-fachen der Erstreckung des zweiten Kontaktbereiches parallel zur Symmetrieachse kann insbesondere Gewicht eingespart werden, wobei dennoch über eine wesentliche und ausreichende Länge des zweiten Kontaktbereiches ein Tauchkolben entlang des Verstärkungselements abgleiten und in seine endgültige Position an der Stützeinheit gelangen kann. Besonders bevorzugt ist die Längserstreckung des Verstärkungselements zumindest gleich der Erstreckung des zweiten Kontaktbereiches parallel zur Symmetrieachse, wobei der gesamte zweite Kontaktbereich durch das Verstärkungselement abgeschirmt wird und zusätzlich, wenn das Verstärkungselement eine größere Erstreckung als die Erstreckung des zweiten Kontaktbereiches parallel zur Symmetrieachse aufweist, auch der auf der Oberseite des zweiten Kontaktbereiches liegende Bereich des Grundkörpers durch das Verstärkungselement geschützt ist. In einer besonders bevorzugten Ausführungsform ist das Verstärkungselement derart ausgebildet, dass es den Grundkörper auf zwei Seiten überlagert, wobei die Längserstreckung des Verstärkungselements im Wesentlichen größer als das Doppelte der Erstreckung des zweiten Kontaktbereiches parallel zur Symmetrieachse ist.

Besonders bevorzugt ist das Verstärkungselement als Verschleißteil ausgebildet, welches nach Erreichen der Lebensdauergrenze auswechselbar ist. Insbesondere dann, wenn als Verstärkungselement ein relativ dünnwandig ausgebildetes Blechteil zum Einsatz kommt, ist es von Vorteil, dass dieses nach Abnutzung auf einfache Weise durch einen Monteur ohne Zusatzwerkzeug ausgetauscht werden kann. Weiterhin bevorzugt können solche Verstärkungselemente als Standardbauteile in großen Stückzahlen hergestellt werden, was die Fertigungskosten senkt und weiterhin eine universelle Einsetzbarkeit desselben Typs von Verstärkungselementen an verschiedenen Stützeinheiten ermöglicht. Auf diese Weise können insgesamt die Fertigungskosten für die Stützeinheit reduziert werden, wobei durch den Einsatz von besonders dünnwandigen Verstärkungselementen das Gewicht der Stützeinheit drastisch reduziert werden kann. Bevorzugt sind Verstärkungselemente vorgesehen, die nicht nur den kegelförmigen, seitlichen Teil der zweiten Kontaktseite bedecken, sondern auch den oberen, im Wesentlichen ringförmigen Teil der zweiten Kontaktseite, welcher der ersten Kontaktseite des Grundkörpers gegenüber liegt. Die Verstärkungselemente sind hierdurch geeignet, die Gewichtskraft des Nutzfahrzeuges, die über den Tauchkolben in vertikaler Richtung, das heißt quer zur ersten Kontaktfläche eingeleitet wird, aufzunehmen und gleichmäßig an das Material des Grundkörpers zu übertragen. Die Verstärkungselemente verhindern auf diese Weise einen Abrieb am Grundkörper sowohl an den seitlich gelegenen Bereichen der zweiten Kontaktseite, als auch im ringförmigen, oberen Bereich der zweiten Kontaktseite. Dabei halten die Verstärkungselemente vorzugsweise Stöße und ähnliche Kraftimpulse von der Oberseite des Grundkörpers ab.

Insbesondere bevorzugt ist an der zweiten Kontaktseite ein Verstärkungsring festlegbar, welcher den Grundkörper gegenüber Krafteinwirkung vom Tauchkolben auf die zweite Kontaktseite verstärkt. Der Verstärkungsring ist besonders bevorzugt in eine entsprechende ringförmige Nut am Grundkörper eingesetzt, wobei besonders bevorzugt, das Material im Randbereich der Nut eine Hinterschneidung mit dem Verstärkungsring bildet, welche diesen in Position hält. Darüber hinaus bevorzugt ist der Verstärkungsring vom Material des Grundkörpers umgossen. Der Verstärkungsring dient der Verstärkung der zweiten Kontaktseite des Grundkörpers, wobei besonders die durch die Einwirkung des Tauchkolbens auf die Oberseite des Grundkörpers auftretenden, in Radialrichtung wirkenden Kräfte durch den Verstärkungsring aufgenommen werden. Diese Kräfte werden dabei im Material des Verstärkungsringes als Zugspannungen aufgenommen. Vorzugsweise ist der Verstärkungsring aus Stahl hergestellt, welcher besonders hohe Zugspannungen aufnehmen kann. Alternativ bevorzugt ist der Verstärkungsring aus einem Kohlefaserwerkstoff ausgebildet, welcher zwar teurer als Stahl ist, dabei aber noch größere Zugspannungen bei deutlich reduziertem Gewicht aufnehmen kann.

Vorzugsweise ist der Verstärkungsring auf der der ersten Kontaktseite gegenüberliegenden Seite des Grundkörpers festgelegt. Mit dieser Anordnung ist der Verstärkungsring besonders gut dafür ausgelegt, die senkrecht zur ersten Kontaktseite wirkenden Kräfte vom Tauchkolben aufzunehmen und in das Material des Grundkörpers einzuleiten. Der Verstärkungsring kann dabei vorzugsweise zusätzlich zu ebenfalls an der zweiten Kontaktfläche festgelegten Verstärkungselementen an dem Grundkörper festgelegt sein. Die Verstärkungselemente sichern dabei den kegelförmigen Teil der zweiten Kontaktseite des Grundkörpers gegen Kontakt mit dem Tauchkolben ab.

Weitere Vorteile und Merkmale der vorliegenden Erfindung ergeben sich aus der nachfolgenden Beschreibung mit Bezug auf die beigefügten Figuren. Es versteht sich, dass einzelne nur in bestimmten Ausführungsformen bzw. Figuren gezeigte Merkmale auch in anderen Ausführungsformen zum Einsatz gelangen können, sofern dies nicht explizit ausgeschlossen wurde oder sich aufgrund von technischen Gegebenheiten verbietet.

Es zeigen:
- Fig. 1: Eine geschnittene Ansicht einer bevorzugten Ausführungsform der erfindungsgemäßen Stützeinheit,
- Fig. 2: eine parallel zur zweiten Kontaktseite geschnittene Ansicht einer Ausführungsform der Stützeinheit,
- Fig. 3: eine Schnittansicht einer weiteren Ausführungsform der Stützeinheit,
- Fig. 4: eine perspektivische Ansicht einer bevorzugten Ausführungsform eines erfindungsgemäßen Verstärkungselements,
- Fig. 5: eine geschnittene Ansicht einer weiteren bevorzugten Ausführungsform der Stützeinheit,
- Fig. 6: eine Draufsicht auf eine bevorzugte Ausführungsform der erfindungsgemäßen Stützeinheit,
- Fig. 7: eine Schnittansicht einer weiteren bevorzugten Ausführungsform der erfindungsgemäßen Stützeinheit, und
- Fig. 8: eine Schnittansicht einer bevorzugten Ausführungsform der Stützeinheit mit daran angeordnetem Tauchkolben.

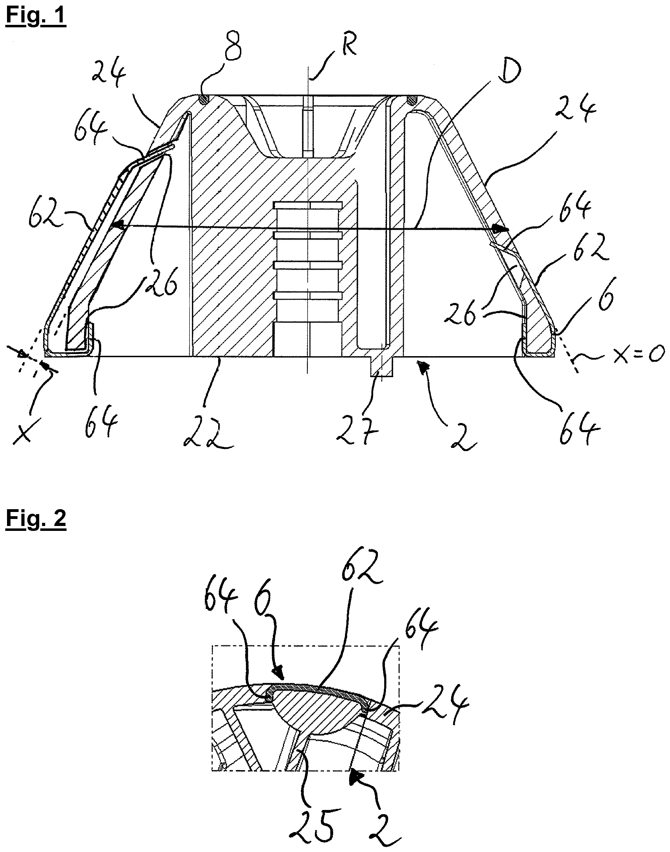

Bei der in Fig. 1 gezeigten Ausführungsform der Stützeinheit ist ein im Wesentlichen kegelstumpfförmiger Grundkörper 2 vorgesehen. Abweichungen von der Kegelstumpfform bestehen insbesondere in den Sicherungsabschnitten 26 und in den Rundungen an der zweiten Kontaktseite 24. An seiner Unterseite weist der Grundkörper 2 eine erste Kontaktseite 22 auf, an welcher der Grundkörper an einem Fahrwerksteil eines Nutzfahrzeuges festlegbar ist. Vorzugsweise wird der Grundkörper 2 auf einen Führungslenker eines Fahrwerkes festgelegt, bevorzugt festgeschraubt. Dabei dient der Eingriffsabschnitt 27 zur Verdrehsicherung des Grundkörpers 2. Der Eingriffsabschnitt greift in eine korrespondierende Geometrie, beispielsweise eine zylinderförmige Aussparung, am Fahrwerksteil ein. Mittig bezogen auf eine Symmetrieachse R ist im Grundkörper eine Aussparung mit beispielsweise einem Gewinde vorgesehen. In diesem kann ein Gewinde einer Schraube oder eines Bolzens, welcher den Grundkörper 2 gegen das Fahrwerksteil verspannt, zum Eingriff gebracht werden. An der zweiten Kontaktseite 24 des Grundkörpers 2 ist zumindest ein Verstärkungselement 6 festgelegt. Dabei ist das links dargestellte Verstärkungselement 6 eine erste Ausführungsform und das rechts dargestellte Verstärkungselement 6 eine weitere, bevorzugte Ausführungsform des Verstärkungselements 6. Der Unterschied beider Verstärkungselemente 6 besteht darin, dass das linke Verstärkungselement 6 eine Anlagefläche 62 mit einem größeren maximalen Abstand x von der ersten Kontaktseite 24 und einer größeren Längserstreckung aufweist, als das rechts gezeigte Verstärkungselement 6. Das links gezeigte Verstärkungselement 6 ist dabei vorzugsweise nur formschlüssig mit dem Grundkörper 2 verbunden, wobei ein Herausgleiten des Verstärkungselements 6 nach unten durch die Auflage des Grundkörpers 2 auf einem Fahrwerksteil (nicht gezeigt) verhindert wird. Das Verstärkungselement 6 weist zwei Halteabschnitte 64 auf, die in korrespondierenden Sicherungsabschnitte 26 formschlüssig eingreifen. Um das Verstärkungselement 6 am dem Grundkörper 2 festzulegen, wird es vorzugsweise bereichsweise elastisch verformt, um beispielsweise zuerst den unteren Halteabschnitt 64 und anschließend den oberen Halteabschnitt 64 in den jeweiligen formschlüssigen Eingriff mit dem korrespondierenden Sicherungsabschnitt 26 zu bringen. Bei der in Figur 1 links gezeigten Ausführungsform des Verstärkungselements 6 wird dieses von unten her in den Grundkörper 2 eingeschoben. Das in Figur 1 rechts gezeigte Verstärkungselement 6 ist vorzugsweise im Bereich der Halteabschnitte 64 und besonders bevorzugt auch im Bereich der Haltefläche 62 in das Material des Grundkörpers 2 eingegossen. Mit anderen Worten werden Verstärkungselemente 6 in der in Figur 1 rechts gezeigten Weise bereits in die Gussform eines Grundkörpers 2 eingelegt bzw. eingebettet und anschließend vom Material, vorzugsweise Kunststoff oder ein leichtes Metall, umgossen. In Figur 1 ist weiterhin der mittlere Durchmesser D der zweiten Kontaktseite 24 des Grundkörpers 2 dargestellt, der in einem bestimmten Verhältnis zu dem maximalen Abstand x der Anlageflächen 62 von der Kontaktseite 24 bzw. deren Oberfläche im Bereich des Verstärkungselements 6 steht. Das in Figur 1 links gezeigte Verstärkungselement 6 weist einen maximalen Abstand x auf, der größer 0 ist. Das in Figur 1 rechts gezeigte Verstärkungselement weist einen maximalen Abstand x auf, der gleich 0 ist. Bevorzugt kann durch die Verwendung des in der Figur links gezeigten Verstärkungselements 6 ein Tauchkolben (nicht gezeigt) auf die Stützeinheit aufgeschoben werden, der einen größeren Innendurchmesser aufweist als der jeweils korrespondierende Durchmesser der zweiten Kontaktseite 24. Somit findet die Abstützung des Tauchkolbens gegenüber dem Grundkörper 2 im Wesentlichen oder ausschließlich über die Verstärkungselemente statt.

Fig. 2 zeigt eine Detailansicht des in Fig. 1 rechts gezeigten Verstärkungselements 6. Dabei ist zu erkennen, dass das Verstärkungselement 6 auch seitliche Halteabschnitte 64 aufweist, welche in das Material des Grundkörpers 2 eingreifen. Insbesondere bevorzugt wird dabei der Stoffschluss durch einen zusätzlichen Formschluss zwischen den Halteabschnitten 64 und den korrespondierenden Geometrien des Grundkörpers 2 geschaffen. Weiterhin ist dargestellt, dass das Verstärkungselement 6 vorzugsweise auf Höhe einer Strebe 25 am Grundkörper 2 festgelegt ist. Auf diese Weise kann eine Kraft von dem Verstärkungselement 6 unmittelbar in die Strebe 25 eingeleitet werden und die Stabilität der Stützeinheit kann somit erhöht werden, wobei das Gewicht des Grundkörpers 2 reduziert werden kann.

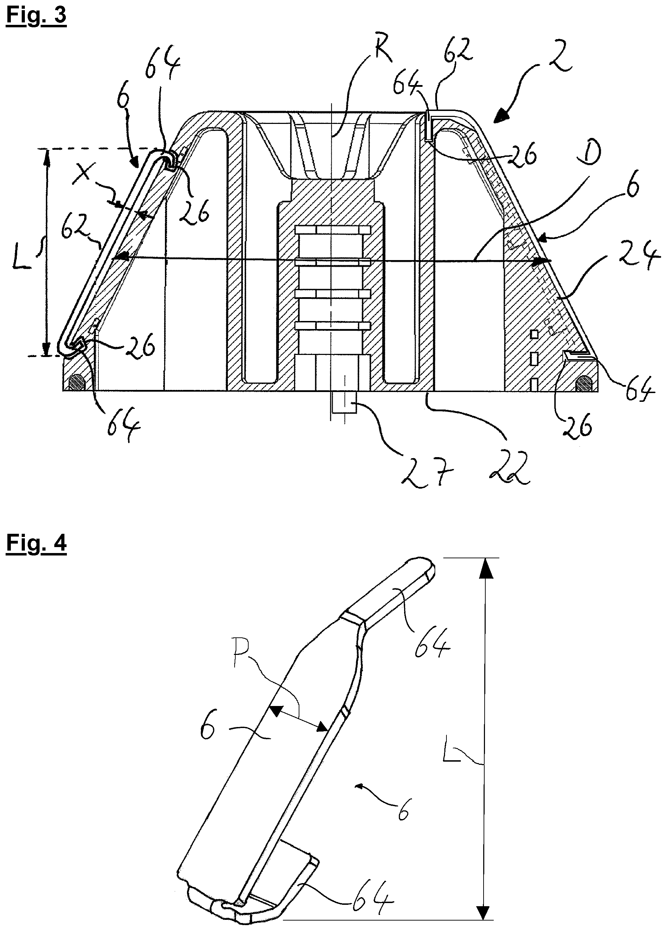

Fig. 3 zeigt eine Schnittansicht einer bevorzugten Ausführungsform der erfindungsgemäßen Stützeinheit, welche stark der in Fig. 1 gezeigten Ausführungsform ähnelt. Im Unterschied zu dem Verstärkungselement 6 in Fig. 1 ist das Verstärkungselement 6 von Fig. 3 formschlüssig an dem Grundkörper 2 festgelegt, wobei die Halteabschnitte 64 krallen- oder klauenartig in entsprechende Sicherungsabschnitte 26 des Grundkörpers 2 eingreifen. Mit anderen Worten verlaufen die distalen Enden der Halteabschnitte 64 vorzugsweise aufeinander zu. Um das Verstärkungselement 6 in formschlüssigen Eingriff mit dem Grundkörper 2 zu bringen ist eine elastische Verformung des Verstärkungselements vorzugsweise im Bereich der Anlagefläche 62 nötig. Es ist daher bevorzugt, das Verstärkungselement 6 relativ dünnwandig, beispielsweise als dünnes Blech, auszulegen, damit ein Anwender allein durch Aufbringen einer händischen Verbiegekraft das Verstärkungselement 6 in Eingriff mit dem Grundkörper 2 bringen kann. In Fig. 3 ist weiterhin das Verhältnis der Längserstreckung L des Verstärkungselements 6 zur Erstreckung des Grundkörpers 2 längs oder parallel zur Symmetrieachse R gezeigt. Vorliegend ist die Längserstreckung L des Verstärkungselements 6 ungefähr zwei Drittel der Erstreckung des Grundkörpers 2 parallel zur Symmetrieachse R.

Fig. 4 zeigt ein Verstärkungselement 6 in perspektivischer Ansicht. Das in Fig. 4 gezeigte Verstärkungselement 6 wird bevorzugt bei der in Fig. 1 gezeigten Ausführungsform eingesetzt. Das Verstärkungselement 6 weist zwei Halteabschnitte 64 auf. Weiterhin ist bei dem in Fig. 4 dargestellten Verstärkungselement 6 der Zusammenhang zwischen der Periphererstreckung P und der Längserstreckung L gezeigt. Die Längserstreckung L ergibt sich jedoch erst im zusammengebauten Zustand des Verstärkungselements 6 an dem Grundkörper 2.

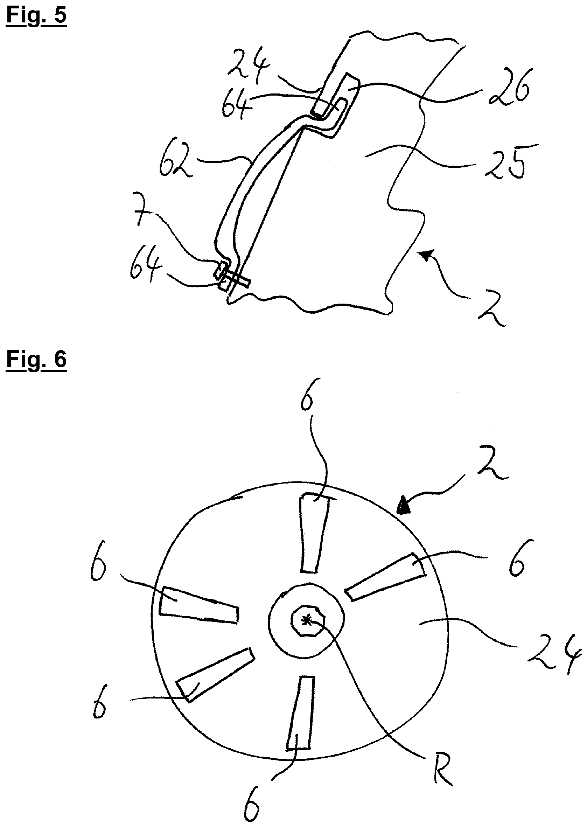

Fig. 5 zeigt eine geschnittene Ansicht einer weiteren bevorzugten Ausführungsform der erfindungsgemäßen Stützeinheit, wobei das Verstärkungselement 6 einen ersten Halteabschnitt 64 aufweist, welcher mit dem entsprechend korrespondierenden Sicherungsabschnitt 26 des Grundkörpers 2 in Eingriff bringbar ist, aufweist. An einem zweiten Halteabschnitt 64 des Verstärkungselements 6 ist ein Sicherungselement 7 vorgesehen. Das Sicherungselement 7 ist beispielsweise eine Schraube oder ein Bolzen. Diese Ausführungsform eignet sich insbesondere dann, wenn das Verstärkungselement vorzugsweise im Bereich der Anlagefläche 62 eine so große Materialdicke aufweist, dass ein händisches elastisches Verformen des Verstärkungselements 6 nicht möglich ist. Es kann auf diese Weise zuerst der obere Halteabschnitt 64 in formschlüssigen Eingriff mit dem Grundkörper 2 gebracht werden und anschließend der untere Halteabschnitt 64 des Verstärkungselements 6 über das Sicherungselement 7 an dem Grundkörper 2 festgelegt werden.

In Fig. 6 ist schematisch eine Draufsicht eines Grundkörpers 2 mit daran festgelegten Verstärkungselementen 6 gezeigt. Die Verstärkungselemente 6 sind vorzugsweise unregelmäßig über dem Umfang der zweiten Kontaktseite 24 des Grundkörpers 2 verteilt an diesem festgelegt. Auf diese Weise können in bestimmten Richtungen am Grundkörper höhere oder geringere Kräfte im Einsatz des Nutzfahrzeuges aufgenommen werden. Es versteht sich, dass der in Fig. 6 gezeigte Gegenstand nur beispielhaft ist und auch eine größere Anzahl von Verstärkungselementen 6 oder eine geringere wie beispielsweise 4 Verstärkungselemente 6 an dem Grundkörper 2 angeordnet sein können, um den Grundkörper 2, insbesondere bevorzugt dessen zweite Kontaktseite 24, vor direktem Kontakt mit einem Tauchkolben einer Luftfedereinheit eines Nutzfahrzeuges zu schützen.

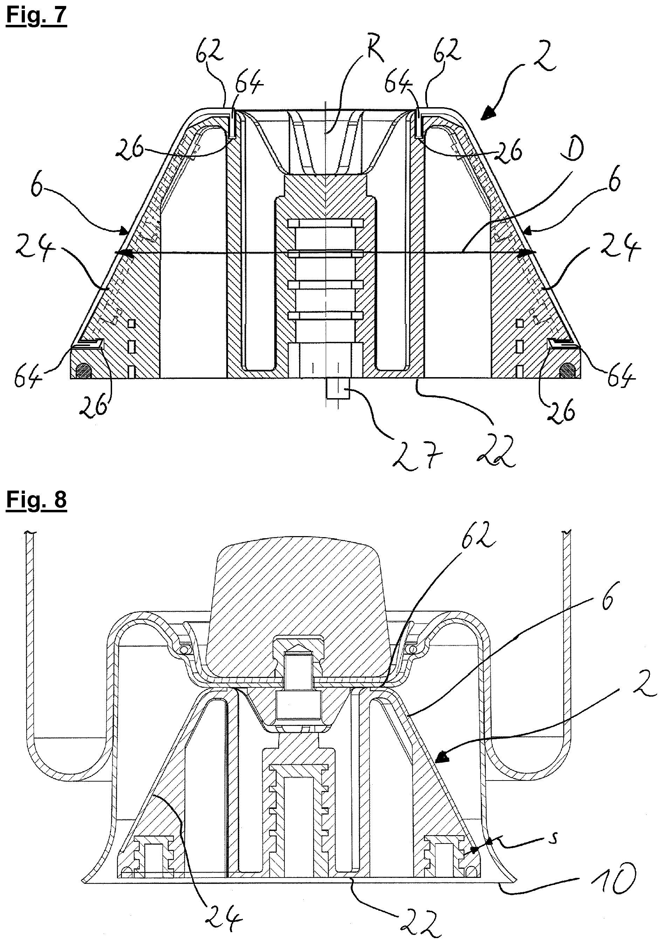

Fig. 7 zeigt eine geschnittene Ansicht einer bevorzugten Ausführungsform des Grundkörpers 2. Dabei sind Verstärkungselemente 6 vorgesehen, die nicht nur den kegelförmigen, seitlichen Teil der zweiten Kontaktseite 24 bedecken, sondern auch den oberen, im Wesentlichen ringförmigen Teil der zweiten Kontaktseite 24, welcher der ersten Kontaktseite 22 gegenüber liegt. Die Verstärkungselemente 6 sind somit geeignet, die Gewichtskraft des Nutzfahrzeuges, die über den Tauchkolben 10 in vertikaler Richtung, das heißt quer zur ersten Kontaktfläche 22 eingeleitet wird, aufzunehmen und gleichmäßig an das Material des Grundkörpers 2 zu übertragen. Die Verstärkungselemente 6 verhindern auf diese Weise einen Abrieb am Grundkörper 2 sowohl an den seitlich gelegenen Bereichen der zweiten Kontaktseite 24, als auch im ringförmigen, oberen Bereich der zweiten Kontaktseite 24. Es versteht sich, dass bei der in Fig. 7 gezeigten Ausführungsform zur weiteren Verstärkung ein Verstärkungsring 8, wie in der Ausführungsform von Fig. 1, an der zweiten Kontaktseite 24 festgelegt sein kann, auch wenn dieser in Fig. 7 nicht explizit gezeigt ist.

Fig. 8 zeigt eine Schnittansicht einer bevorzugten Stützeinheit mit einem daran angeordneten Tauchkolben 10. Vorzugsweise ist der Tauchkolben dabei im seitlichen, kegelförmigen Bereich der zweiten Kontaktfläche 24 von dem Grundkörper 2 und den daran festgelegten Verstärkungselementen 6 beabstandet. Insbesondere bevorzugt verbleibt beim vollen Aufsetzen des Tauchkolbens 10 auf den oberen, ringförmigen Teil der zweiten Kontaktfläche ein Spiel s zwischen Tauchkolben 10 und dem Grundkörper 2, oder den Verstärkungselementen 6. Die Zentrierung des Tauchkolbens an dem Grundkörper 2 erfolgt durch die im oberen Bereich des Grundkörpers eingelassene, im Wesentlichen kegelstumpfförmige Aussparung, in welche ein am Tauchkolben 10 festgelegter Konus eingreift. Dieses Spiel s ist vorzugsweise auch zwischen den in den Figuren 1, 3 und 7 gezeigten Grundkörpern 2 und daran angeordneten Tauchkolben 10 (jeweils nicht gezeigt) vorgesehen. Vorzugsweise findet über die Einstellung der an der Unterseite des Tauchkolbens 10 festgelegten Schraube eine Justierung des Konus statt, welcher in die entsprechende Aussparung an der Oberseite des Grundkörpers 2 eingreift. Auf diese Weise kann das Aufsetzen des Tauchkolbens 10 auf den Grundkörper 2, insbesondere auf die Oberseite der zweiten Kontaktfläche 24 des Grundkörpers 2, feinjustiert werden. Vorzugsweise sichert also der Konus am Tauchkolben 10 im Zusammenspiel mit der Aussparung, bzw. kegelförmigen Mulde am Grundkörper 2 den Tauchkolben 10 gegen seitliches Verschieben relativ zum Grundkörper 2, wenn der Tauchkolben 10 vollständig auf dem Grundkörper 2 aufliegt, während im seitlichen Bereich der zweiten Kontaktfläche ein Spiel s zwischen Grundkörper 2 und Tauchkolben 10 verbleibt. Es versteht sich, angesichts der ähnlichen geometrischen Ausgestaltung der Oberseite des Grundkörpers 2, dass dieses Merkmal, welches nur in Fig. 8 explizit gezeigt ist, auch in den Ausführungsformen der Figuren 1, 3 und 7 bevorzugt ist.

### Bezugszeichenliste:

- 2: - Grundkörper
- 6: - Verstärkungselement
- 7: - Sicherungselement
- 8: - Verstärkungsring
- 22: - erste Kontaktseite
- 24: - zweite Kontaktseite
- 25: - Strebe
- 26: - Sicherungsabschnitt
- 27: - Eingriffsabschnitt
- 62: - Anlagefläche
- 64: - Halteabschnitt
- D: - mittlerer Durchmesser
- L: - Längserstreckung
- P: - Periphererstreckung
- R: - Symmetrieachse
- s: - Spiel
- x: - maximaler Abstand

## Patentansprüche

1. Stützeinheit zum Einsatz an einer Luftfeder, aufweisend einen Grundkörper (2) und ein Verstärkungselement (6),
wobei der Grundkörper (2) eine erste Kontaktseite (22) zur Festlegung am Fahrwerk eines Nutzfahrzeuges aufweist,
**dadurch gekennzeichnet, dass** an einer zweiten Kontaktseite (24) des Grundkörpers (2) das Verstärkungselement (6) festlegbar ist und zur Abstützung eines Tauchkolbens (10) einer Luftfeder ausgelegt ist,
wobei das Verstärkungselement (6) aus einem Material höherer Festigkeit und/oder Härte ausgebildet ist als der Grundkörper (2).

2. Stützeinheit nach Anspruch 1,
wobei der Grundkörper (2) aus Kunststoff ausgebildet ist und/oder wobei das Verstärkungselement (6) aus Metall ausgebildet ist.

3. Stützeinheit nach einem der vorhergehenden Ansprüche,
wobei das Verstärkungselement (6) eine Anlagefläche (62) und einen Halteabschnitt (64) aufweist,
wobei die Anlagefläche (62) vom Grundkörper (2) abgewandt ist, und wobei der Halteabschnitt (64) in Eingriff mit dem Grundkörper (2) bringbar ist.

4. Stützeinheit nach Anspruch 3,
wobei der Halteabschnitt (64) in formschlüssigen Eingriff mit einem Sicherungsabschnitt (26) des Grundkörpers (2) bringbar ist.

5. Stützeinheit nach einem der vorhergehenden Ansprüche,
wobei das Verstärkungselement (6) bereichsweise in das Material des Grundkörpers (2) eingegossen ist.

6. Stützeinheit nach Anspruch 4,
wobei der Halteabschnitt (64) durch elastische Verformung des Verstärkungselements (6) in formschlüssigen Eingriff mit dem Sicherungsabschnitt (26) bringbar ist,
wobei der Sicherungsabschnitt (26) und der Halteabschnitt (64) eine Hinterschneidung bilden, und
wobei der Eingriff zwischen dem Halteabschnitt (64) und dem Sicherungsabschnitt (26) lösbar ist.

7. Stützeinheit nach einem der Ansprüche 3 bis 6,
wobei ein Sicherungselement (7) vorgesehen ist um den Halteabschnitt (64) am Grundkörper (2) zu sichern.

8. Stützeinheit nach einem der Ansprüche 3 bis 7,
wobei das Verstärkungselement (6) eine Vielzahl von Halteabschnitten (64) aufweist.

9. Stützeinheit nach einem der vorhergehenden Ansprüche,
wobei die zweite Kontaktseite (24) im Wesentlichen kegelförmig oder kegelstumpfförmig ausgebildet ist.

10. Stützeinheit nach Anspruch 3,
wobei die Anlagefläche (62) einen maximalen Abstand (x) von der zweiten Kontaktseite (24) aufweist,
wobei das Verhältnis des maximalen Abstandes (x) zu einem mittleren Durchmesser (D) der zweiten Kontaktseite (24) 0,02 bis 0,3 beträgt, vorzugsweise 0,05 bis 0,2 beträgt und besonders bevorzugt bei ca. 0,05 bis 0,1 liegt.

11. Stützeinheit nach einem der vorhergehenden Ansprüche,
wobei eine Vielzahl von Verstärkungselementen (6) vorgesehen ist, welche an der zweiten Kontaktseite (24) verteilt angeordnet ist, und wobei die Verstärkungselemente (6) vorzugsweise ungleichmäßig verteilt an der zweiten Kontaktseite (24) festgelegt oder festlegbar sind.

12. Stützeinheit nach einem der vorhergehenden Ansprüche,
wobei der Grundkörper auf seiner der zweiten Kontaktseite (24) abgewandten Seite eine Strebe (25) aufweist,
wobei das Verstärkungselement (6) auf Höhe der Strebe (25) an der zweiten Kontaktseite (24) festgelegt ist.

13. Stützeinheit nach einem der Ansprüche 3 bis 12,
wobei die Anlagefläche (62) eine Längserstreckung (L) quer zur ersten Kontaktseite (22) und eine Periphererstreckung (P) längs einer um eine Symmetrieachse (R) des Grundkörpers (2) verlaufenden Umfangsrichtung aufweist,
wobei die Längserstreckung (L) größer ist als die Periphererstreckung (P), und wobei die Längserstreckung (L) des Verstärkungselement (6) vorzugsweise zumindest ein 0,3-faches, vorzugsweise ein zumindest 0,6-faches und besonders bevorzugt zumindest gleich der Erstreckung des zweiten Kontaktbereiches (24) parallel zur Symmetrieachse (R) ist.

14. Stützeinheit nach einem der vorhergehenden Ansprüche,
wobei an der zweiten Kontaktseite (24) ein Verstärkungsring (8) festlegbar ist, welcher den Grundkörper (2) gegenüber Krafteinwirkung vom Tauchkolben (10) auf die zweite Kontaktseite (24) verstärkt.

15. Stützeinheit nach Anspruch 14,
wobei der Verstärkungsring (8) auf der der ersten Kontaktseite (22) gegenüberliegenden Seite des Grundkörpers (2) festgelegt ist.

## Claims

1. A support unit for use on an air spring, having a main body (2) and a reinforcement element (6),
wherein the main body (2) has a first contact side (22) for fixing to the chassis of a utility vehicle,
**characterized in that** the reinforcement element (6) is fixable to a second contact side (24) of the main body (2) and is designed for supporting a plunger (10) of an air spring,
wherein the reinforcement element (6) is formed from a material of higher strength and/or hardness than the main body (2).

2. The support unit as claimed in claim 1,
wherein the main body (2) is formed from plastic, and/or wherein the reinforcement element (6) is formed from metal.

3. The support unit as claimed in one of the preceding claims,
wherein the reinforcement element (6) has an abutment surface (62) and a holding section (64),
wherein the abutment surface (62) is averted from the main body (2), and wherein the holding section (64) can be placed in engagement with the main body (2).

4. The support unit as claimed in claim 3,
wherein the holding section (64) can be placed in positively locking engagement with a securing section (26) of the main body (2).

5. The support unit as claimed in one of the preceding claims,
wherein the reinforcement element (6) is regionally encapsulated in the material of the main body (2).

6. The support unit as claimed in claim 4,
wherein the holding section (64) can be placed in positively locking engagement with the securing section (26) by elastic deformation of the reinforcement element (6),
wherein the securing section (26) and the holding section (64) form an undercut, and
wherein the engagement between the holding section (64) and the securing section (26) is releasable.

7. The support unit as claimed in one of claims 3 to 6,
wherein a securing element (7) is provided for securing the holding section (64) on the main body (2).

8. The support unit as claimed in one of claims 3 to 7,
wherein the reinforcement element (6) has a multiplicity of holding sections (64).

9. The support unit as claimed in one of the preceding claims,
wherein the second contact side (24) is of substantially conical or frustoconical form.

10. The support unit as claimed in claim 3,
wherein the abutment surface (62) has a maximum spacing (x) from the second contact side (24),
wherein the ratio of the maximum spacing (x) to a mean diameter (D) of the second contact side (24) amounts to 0.02 to 0.3, preferably 0.05 to 0.2 and particularly preferably approximately 0.05 to 0.1.

11. The support unit as claimed in one of the preceding claims,
wherein a multiplicity of reinforcement elements (6) is provided which are arranged in a distributed manner on the second contact side (24), and wherein the reinforcement elements (6) are fixed or fixable in a preferably non-uniformly distributed manner to the second contact side (24).

12. The support unit as claimed in one of the preceding claims,
wherein the main body has a strut (25) on its side averted from the second contact side (24),
wherein the reinforcement element (6) is fixed to the second contact side (24) at the level of the strut (25).

13. The support unit as claimed in one of claims 3 to 12,
wherein the abutment surface (62) has a longitudinal extent (L) transversely with respect to the first contact side (22) and a peripheral extent (P) along a circumferential direction running around an axis of symmetry (R) of the main body (2),
wherein the longitudinal extent (L) is greater than the peripheral extent (P), and wherein the longitudinal extent (L) of the reinforcement element (6) is preferably at least 0.3 times, preferably at least 0.6 times and particularly preferably at least equal to, the extent of the second contact region (24) parallel to the axis of symmetry (R).

14. The support unit as claimed in one of the preceding claims,
wherein a reinforcement ring (8) is fixable to the second contact side (24), which reinforcement ring reinforces the main body (2) with respect to an exertion of force on the second contact side (24) by the plunger (10).

15. The support unit as claimed in claim 14,
wherein the reinforcement ring (8) is fixed to that side of the main body (2) which is situated opposite the first contact side (22).

## Revendications

1. Ensemble de support destiné à l'utilisation sur un ressort pneumatique, comportant un corps de base (2) et un élément de renforcement (6),
le corps de base (2) présentant une première face de contact (22) destinée à être immobilisée sur le train de roulement d'un véhicule utilitaire,
**caractérisé en ce que**
l'élément de renforcement (6) est susceptible d'être immobilisé sur une seconde face de contact (24) du corps de base (2) et est conçu pour supporter un piston plongeur (10) d'un ressort pneumatique,
l'élément de renforcement (6) étant réalisé en un matériau d'une résistance et/ou d'une dureté supérieure à celle du corps de base (2).

2. Ensemble de support selon la revendication 1,
dans lequel
le corps de base (2) est réalisé en matière plastique et/ou l'élément de renforcement (6) est réalisé en métal.

3. Ensemble de support selon l'une des revendications précédentes,
dans lequel
l'élément de renforcement (6) présente une surface d'appui (62) et une portion de retenue (64),
la surface d'appui (62) étant détournée du corps de base (2) et
la portion de retenue (64) étant susceptible d'être amenée en engagement avec le corps de base (2).

4. Ensemble de support selon la revendication 3,
dans lequel
la portion de retenue (64) est susceptible d'être amenée en engagement par coopération de forme avec une portion de blocage (26) du corps de base (2).

5. Ensemble de support selon l'une des revendications précédentes,
dans lequel
l'élément de renforcement (6) est localement intégré par coulée dans le matériau du corps de base (2).

6. Ensemble de support selon la revendication 4,
dans lequel
la portion de retenue (64) est susceptible d'être amenée en engagement par coopération de forme avec la portion de blocage (26) par déformation élastique de l'élément de renforcement (6),
la portion de blocage (26) et la portion de retenue (64) forment une contre-dépouille, et
l'engagement entre la portion de retenue (64) et la portion de blocage (26) est détachable.

7. Ensemble de support selon l'une des revendications 3 à 6,
dans lequel
il est prévu un élément de blocage (7) pour bloquer la portion de retenue (64) sur le corps de base (2).

8. Ensemble de support selon l'une des revendications 3 à 7,
dans lequel
l'élément de renforcement (6) comprend une multitude de portions de retenue (64).

9. Ensemble de support selon l'une des revendications précédentes,
dans lequel
la seconde face de contact (24) est réalisée sous forme sensiblement conique ou tronconique.

10. Ensemble de support selon la revendication 3,
dans lequel
la surface d'appui (62) présente une distance maximale (x) de la seconde face de contact (24),
le rapport de la distance maximale (x) sur un diamètre moyen (D) de la seconde face de contact (24) est de 0,02 à 0,3, de préférence de 0,05 à 0,2 et de manière particulièrement préférée d'environ 0,05 à 0,1.

11. Ensemble de support selon l'une des revendications précédentes, dans lequel
il est prévu une multitude d'éléments de renforcement (6) qui sont agencés en répartition sur la seconde face de contact (24), et
les éléments de renforcement (6) sont immobilisés ou susceptibles d'être immobilisés de préférence en répartition irrégulière sur la seconde face de contact (24).

12. Ensemble de support selon l'une des revendications précédentes, dans lequel
le corps de base comprend une entretoise (25) sur son côté détourné de la seconde face de contact (24),
l'élément de renforcement (6) est immobilisé sur la seconde face de contact (24) au niveau de l'entretoise (25).

13. Ensemble de support selon l'une des revendications 3 à 12,
dans lequel
la surface d'appui (62) présente une extension longitudinale (L) transversalement à la première face de contact (22), et une extension périphérique (P) le long d'une direction périphérique s'étendant autour d'un axe de symétrie (R) du corps de base (2),
l'extension longitudinale (L) est supérieure à l'extension périphérique (P), et l'extension longitudinale (L) de l'élément de renforcement (6) est d'au moins 0,3 fois, de préférence d'au moins 0,6 fois et de manière particulièrement préférée elle est au moins égale à l'extension de la seconde zone de contact (24) parallèlement à l'axe de symétrie (R).

14. Ensemble de support selon l'une des revendications précédentes,
dans lequel
un anneau de renforcement (8) est susceptible d'être immobilisé sur la seconde face de contact (24), qui renforce le corps de base (2) par rapport à l'action d'une force du piston plongeur (10) sur la seconde face de contact (24).

15. Ensemble de support selon la revendication 14,
dans lequel
l'anneau de renforcement (8) est immobilisé sur le côté du corps de base (2) opposé à la première face de contact (22).
